# EUROPEAN PATENT APPLICATION

(11) **EP 2 690 077 A1**
(43) Date of publication of application: **29.01.2014**
(21) Application number: 12290260.4
(22) Date of filing: 27.07.2012
(51) Int. Cl.: C04B 33/04, C04B 35/00

(54) **Ceramic compositions**

(71) Applicant: Imerys Ceramics France, 75007 Paris (FR)
(72) Inventor: The designation of the inventor has not yet been filed
(74) Representative: Johnston, Magnus George

(57) **Abstract**

A ceramic precursor composition suitable for firing to form a porcelain tile body, engobe composition for a ceramic body, a green body formed from said ceramic precursor composition, a ceramic article obtainable by firing said green body, and processes for making said ceramic article and engobe composition.

## Description

### TECHNICAL FIELD

The present invention is directed to a ceramic precursor composition suitable for firing to form a porcelain tile body, engobe composition for a ceramic body, a green body formed from said ceramic precursor composition, a ceramic article obtainable by firing said green body, and processes for making said ceramic article and engobe composition.

### BACKGROUND

Zirconium silicate (also known as 'zircon') is a naturally occurring mineral which finds use primarily as a whitener/opacifier in the decorative ceramics industry. It has been used as such for many years. However, the cost of this raw material has increased recently and, thus, there is a need for further whitener/opacifier materials to supplant or augment the use of zirconium silicate.

### SUMMARY OF THE INVENTION

In accordance with a first aspect of the present invention, there is provided a ceramic precursor composition suitable for firing to form a tile body, for example, a porcelain tile body, said composition comprising from about 1-20 % by weight alumina and no more than about 10 % by weight zirconium silicate, based on the total dry weight of the ceramic precursor composition. The alumina has a soda (Na₂O) content of greater than about 0.25 % by weight, based on the total weight of alumina.

In accordance with a second aspect of the present invention, there is provided an engobe composition for a ceramic body, said composition comprising from about 1-20 % by weight alumina and no more than about 10 % by weight zirconium silicate, based on the total dry weight of the ceramic precursor composition. The alumina has a soda (Na₂O) content of greater than about 0.25 % by weight.

In accordance with a third aspect of the present invention, there is provided a green body formed from the ceramic precursor composition according to first aspect.

In accordance with a fourth aspect, there is provided a ceramic article obtainable by firing the green body of the third aspect.

In accordance with a fifth aspect of the present invention, there is provided a process for making a ceramic article according to the fourth aspect, comprising:
(i) milling a mixture comprising:
   (a) from about 1-20 % by weight alumina, based on the total dry weight of the mixture being milled, wherein said alumina has a soda (Na₂O) content of greater than about 0.25 % by weight,
   (b) no more than about 10 % by weight zirconium silicate, based on the total dry weight of the mixture being milled,
   (c) at least about 70 % by weight of ceramic precursor material, other than (a) or (b), suitable for firing to form a ceramic article, for example, an earthenware/stoneware tile body, and optionally
   (d) at least about 20 % by weight water, based on the total dry weight of the mixture being milled, and
   (e) up to about 5 % by weight deflocculant, based on the total dry weight of the mixture being milled;
(ii) forming a green body, for example, a green tile body, from said wet-milled mixture;
(iii) optionally drying said green body, for example, said green tile body; and
(iv) firing said tile at a temperature sufficient to form a ceramic article, for example, a porcelain tile.

In accordance with a sixth aspect of the present invention, there is provided a process for making an engobe composition according to the second aspect of the present invention, comprising:
(i) wet-milling a mixture comprising:
   (a) from about 1-20 % by weight alumina, based on the total dry weight of the mixture being milled, wherein said alumina has a soda (Na₂O) content of greater than about 0.25 % by weight,
   (b) no more than about 10 % by weight zirconium silicate, based on the total dry weight of the mixture being milled,
   (c) at least about 70 % by weight of engobe precursor material, other than (a) or (b), suitable for firing to form an engobe layer upon a ceramic article, for example, an earthenware/stoneware tile body,
   (d) at least about 20 % by weight water, based on the total dry weight of the mixture being milled, and
   (e) up to about 5 % by weight deflocculant, based on the total dry weight of the mixture being milled; and
(ii) optionally sizing the resulting wet-milled engobe composition.

In accordance with a seventh aspect, the present invention is directed to the use of alumina having a soda (Na₂O) content of greater than about 0.25 % by weight, based on the total weight of alumina, as whitener and/or opacifier in a ceramic article, for example, a stoneware/earthenware tile or a porcelain stoneware tile, formed from a ceramic precursor composition comprising no more than about 10 % by weight zirconium silicate, based on the total dry weight of the ceramic precursor composition. The alumina is present in the ceramic precursor composition in an amount of from about 1 to about 20 % by weight, based on the total dry weight of the ceramic precursor composition.

In accordance with an eighth aspect, the present invention is directed to the use of alumina having a soda (Na₂O) content of greater than about 0.25 % by weight, based on the total weight of alumina, as whitener and/or opacifier in an engobe composition for a ceramic body, for example, a stoneware/earthenware tile, wherein said engobe composition comprises no more than about 10 % by weight zirconium silicate, based on the total dry weight of the engobe composition. The alumina is present in the engobe composition in an amount of from about 1 to about 20 % by weight, based on the total dry weight of engobe composition.

### BRIEF DESCRIPTION OF THE DRAWINGS

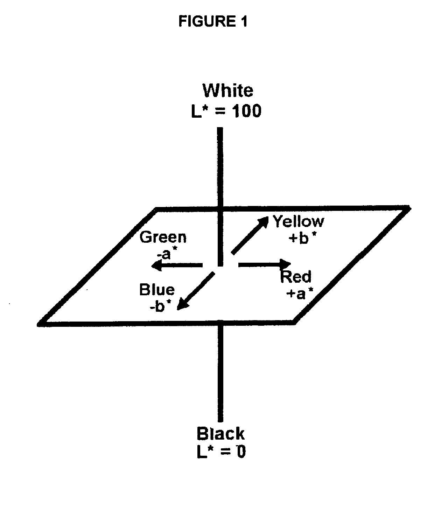

Figure 1 is diagram representing CIELAB color space.

### DETAILED DESCRIPTION OF THE INVENTION

As used herein, the term "ceramic precursor composition" means a composition which comprises materials which may be intimately mixed and milled, optionally in the presence of a liquid medium (e.g. water), shaped and fired (e.g., at a temperature of at least about 800°C) to form a ceramic article, for example, a porcelain tile. The materials typically comprise a mixture of inorganic minerals, clays and optional processing aids, such as sintering aids and deflocculant.

As used herein, the term "engobe composition" means a composition which may be applied (e.g., as a layer) to the surface of a ceramic article (e.g., earthenware or stoneware tile) or green body (e.g., tile body) or partially fired, e.g., pre-fired, green body and which serves as an undercoat to a glaze. Advantageously, the engobe composition does not adversely affect the optical properties (e.g., lightness, whiteness, yellowness, redness, opacity) of the ceramic article (e.g., stoneware/earthenware tile) and may enhance the optical properties of the ceramic article. The engobe composition may be applied for decorative purposes or to improve the surface texture. When a glaze is applied over the engobe the engobe may act as a buffer layer in that it is expansion compatible with both the underlying body and the overlying glaze.

As used herein, the term "green body" means a body in an unfired state. The body may be formed from the ceramic precursor composition of the present invention.

As used herein, the term "vitrifiable frit" means a material:of glassy nature which is prepared by fusion of a blend of crystalline raw materials. A frit is typically used as a glaze component. Vitrifiable frits suitable for use in the present invention may have a composition (by chemical analysis) having an SiO₂ content of from about 40-70 %, an Al₂O₃ content of from about 2-20 %, a B₂O₃ content of from about 2-25 %, a CaO content of from about 0-40 %, for example, from about 1-15 %, a MgO content of up to about 3 %, a Na₂O content of up to about 15 %, a K₂O content of up to about 5 %, a ZrO₂ content of up to about 12 %, a BaO content of up to about 5 %, and a ZnO content of up to about 10 %. The frit may have a TiO₂ content of up to about 10 %, for example, up to about 8 %, or up to about 6 %, or up to about 4 %, or up to about 2 %, or up to about 1 %. The frit may have a Li₂O, PbO, HfO₂, P₂O₅, SrO and/or MnO content of up to about 1 %.

Unless otherwise stated, the mean (average) equivalent particle diameter (d₅₀ value) referred to herein is as measured in a well known manner by laser light scattering of the particulate material in a fully dispersed condition in an aqueous medium using a LA950 machine as supplied by Horiba, referred to herein as a "Horiba LA950 unit". Such a machine provides measurements and a plot of the cumulative percentage by volume of particles having a size, referred to in the art as the 'equivalent spherical diameter' (esd), less than given esd values. The mean particle size d₅₀ is the value determined in this way of the particle esd at which there are 50% by volume of the particles which have an equivalent spherical diameter less than that d₅₀ value. Likewise, d₉₀ is the value determined in this way of the particle esd at which there are 90% by volume of the particles which have an equivalent spherical diameter less than that d₉₀ value. Likewise, d₁₀ is the value determined in this way of the particle esd at which there are 10 % by volume of the particles which have an equivalent spherical diameter less than that d₁₀ value.

In accordance with the first aspect of the present invention, the ceramic precursor or engobe composition comprises from about 1 to about 20 % by weight alumina. The alumina has a soda (Na₂O) content of at greater than about 0.25 % by weight, based on the total weight of the alumina. In certain embodiments, the alumina has a soda content of at least about 0.26 % by weight, or at least about 0.27 % by weight, or at least about 0.28 % by weight, or at least about 0.29 % by weight, or at least about 0.30 % by weight, or least about 0.31 % by weight, or at least about 0.32 % by weight, or at least about 0.33 % by weight, or at least about 0.34 % by weight, or at least about 0.35 % by weight, or at least about 0.36 % by weight, or at least about 0.37 % by weight, or at least about 0.38 % by weight, or at least about 0.39 % by weight, or at least about 0.40 % by weight. In certain embodiments, the alumina has a soda content of no more than about 0.50 % by weight, for example, no more than about 0.45 % by weight, or no more than about 0.40 % by weight. In certain embodiments, the alumina has a soda (Na₂O) content of greater than about 0.25 to about 0.45 % by weight, for example, from about 0.26 to about 0.42 % by weight, or from about 0.28 to about 0.40 % by weight, or from about 0.29 to about 0.40 % by weight, or from about 0.29 to about 0.39 % by weight, or from about 0.29 to about 0.38 % by weight, or from about 0.30 to about 0.38 % by weight, or from about 0.30 to about 0.45 % by weight, from about 0.31 to about 0.45 % by weight, or from about 0.32 to about 0.45 % by weight, or from about 0.33 to about 0.45 % by weight, or from about 0.34 to about 0.45 % by weight, or from about 0.35 to about 0.45 % by weight, or from about 0.36 to about 0.50 % by weight, or from about 0.37 to about 0.45 % by weight, or from about 0.38 to about 0.50 % by weight, or from about 0.38 to about 0.48 % by weight.

In certain embodiments, the alumina comprises up to about 0.05 wt. % Fe₂O₃, for example, from about 0.005 to about 0.04 % Fe₂O₃, for example, from about 0.10 to about 0.03 % Fe₂O₃.

In certain embodiments, the alumina comprises at least about 95.0 % by weight Al₂O₃, for example, at least about 98.0 % by weight Al₂O₃, or at least about 98.5 % by weight, or at least about 99.0 % by weight Al₂O₃.

In certain embodiments, the alumina consists of, or consists essentially of, calcined alumina. Hereafter, the invention may tend to be discussed in terms of calcined alumina, and in relation to aspects where the calcined alumina is processed and/or treated. The invention should not be construed as being limited to such embodiments.

In certain embodiments, the alumina comprises from about 10 to 80 % by weight α-Al₂O₃, based on the total weight of alumina, for example, from about 10 to about 60 % by weight α-Al₂O₃, or from about 10 to about 40 % by weight α-Al₂O₃, or from about 15 to about 30 % by weight α-Al₂O₃, or from about 15 to about 25 % by weight α-Al₂O₃.

In one embodiment, the calcined alumina is prepared by heating aluminium hydroxide (e.g., gibbsite) at a sufficient temperature (e.g., above about 800°C) to form calcined having an α- Al₂O₃ content of at least about 10 % by weight, for example, at least about 15 % by weight, or at least about 20 % by weight, or at least about 50 % by weight, or at least about 75 % by weight, or an α- Al₂O₃ content of essentially 100 % by weight. In another embodiment, the calcined alumina is prepared by use of the Bayer process and heating aluminium hydroxide (e.g., gibbsite) under pressure. Further details of these processes are described below.

In certain embodiments, the alumina, for example, calcined alumina has a BET specific surface area of from about 1 to about 200 m²/g, for example, from about 1 to about 175 m²/g, or from about 1 to about 150 m²/g, or from about 1 to about 125 m²/g or from about 1 to about 100 m²/g. BET specific surface area may be determined in accordance with ISO 9277:2010. In certain embodiments, the alumina, for example, calcined alumina, has a BET specific surface area of from about 8.5 to about 100 m²/g, for example, from about 10-100 m²/g, or from about 10-95 m²/g, or from about 20-95 m²/g, or from about 10-90 m²/g, or from about 20-90 m²/g, or from about 40-90 m²/g, or from about 10-80 m²/g, or from about 20-80 m²/g, or from about 30-80 m²/g, or from about 40-80 m²/g, or from about 50-80 m²/g, or from about 60-80 m²/g, or from about 70-80 m²/g, or from about 8.5-30 m²/g, or from about 10-30 m²/g, or from about 20-40 m²/g, or from about 30-50 m²/g, or from about 40-60 m²/g, or from about 50-70 m²/g, or from about 60-80 m²/g, or from about 70-90 m²/g, or from about 80-100 m²/g, or from about 8.5-10 m²/g, or from about 10-20 m²/g, or from about 20-30 m²/g, or from about 30-40 m²/g, or from about 40-50 m²/g, or from about 50-60 m²/g, or from about 60-70 m²/g, or from about 70-80 m²/g, or from about 80-90 m²/g, or from about 90-100 m²/g.

In certain embodiments, the calcined alumina has a BET surface are of from about 60 to about 100 m²/g and a soda content of at least about 0.30 % by weight, for example, or least about 0.31 % by weight, or at least about 0.32 % by weight, or at least about 0.33 % by weight, or at least about 0.34 % by weight, or at least about 0.35 % by weight, or at least about 0.36 % by weight, or at least about 0.37 % by weight, or at least about 0.38 % by weight, or at least about 0.39 % by weight, or at least about 0.40 % by weight. The calcined alumina may have a BET surface area of from about 60 to about 90 m²/g, for example, from about 65 to about 85 m²/g, or from about 70 to about 80 m²/g. Without wishing to be bound by theory, it has been found that the combination of a BET surface area and relatively high soda content may enhance grindability of the ceramic precursor composition and/or suppress or prevent the growth of primary α-Al₂O₃ crystal in the ceramic article obtained from the ceramic precursor materials.

The calcined alumina may be present in the ceramic precursor or engobe composition in an amount up to about 18 % by weight, based on the total dry weight of the composition, for example, up to about 17 % by weight, or up to about 16 % by weight, or up to about 15 % by weight, or up to about 14 % by weight, or up to about 13 % by weight, or up to about 12 % by weight, or up to about 11 % by weight, or up to about 10 % by weight, or up to about 9 % by weight, or up to about 8 % by weight, or up to about 7 % by weight, or up to about 6 % by weight, or up to about 5 % by weight, or up to about 4 % by weight, or up to about 3 % by weight, or up to about 2 % by weight, based on the total dry weight of the composition. In certain embodiments, the ceramic precursor composition comprises from about 2 to about 15 % by weight alumina, for example, from about 4 to about 12 % by weight alumina, or from about 8 to about 12 % by weight alumina.

The alumina, for example, calcined alumina, may have a mean particle size (d₅₀) of less than about 100 µm, for example, a d₅₀ of less than about 95 µm, or a d₅₀ of less than about 90 µm, or a d₅₀ of less than about 85 µm, or a d₅₀ of less than about 80 µm , or a d₅₀ of less than about 75 µm, or a d₅₀ of less than about 70 µm, or a d₅₀ of less than about 65 µm, or a d₅₀ of less than about 60 µm, or a d₅₀ of less than about 55 µm, or a d₅₀ of less than about 50 µm, or a d₅₀ of less than about 45 µm, or a d₅₀ of less than about 40 µm, or a d₅₀ of less than about 35 µm, or a d₅₀ of less than about 30 µm, or a d₅₀ of less than about 25 µm, or a d₅₀ of less than about 20 µm, or a d₅₀ of less than about 15 µm, or a d₅₀ of less than about 10 µm. In certain embodiments, the alumina has a d₅₀ of at least about 3.0 µm, for example, at least about 4.0 µm, or at least about 5.0 µm.

The alumina, for example, calcined alumina may have a d₉₀ of less than about 120 µm, for example, a d₉₀ of less than about 100 µm, or a d₉₀ of less than about 90 µm, or a d₉₀ of less than about 80 µm, or a d₉₀ of less than about 70 µm, or a d₉₀ of less than about 60 µm, or a d₉₀ of less than about 50 µm, or a d₉₀ of less than about 40 µm, or a d₉₀ of less than about 30 µm, or a d₉₀ of less than about 20 µm, or a d₉₀ of less than about 15 µm.

The alumina, for example, calcined alumina, may have a d₁₀ of less than about 20 µm, for example, a d₁₀ of less than about 15 µm, or a d₁₀ of less than about 10 µm, or a d₁₀ of less than about 8 µm, or a d₁₀ of less than about 6 µm, or a d₁₀ of less than about 4 µm, or a d₁₀ of less than about 2 µm, or a d₁₀ of less than about 1 µm.

In certain embodiments, the alumina has d₅₀ of less than about 80 µm, e.g., less than about 70 µm, a d₉₀ of less than about 120 µm, and a d₁₀ of less than about 15 µm. For example, the alumina may have a d₅₀ of less than about 50 µm, a d₉₀ of less than about 80 µm, and a d₁₀ of less than about 15 µm, for example, a d₁₀ of less than about 10 µm. For example, the alumina may have a d₅₀ of less than about 20 µm, a d₉₀ of less than about 80 µm, and a d₁₀ of less than about 10 µm. For example, the alumina may have a d₅₀ of less than about 10 µm, a d₉₀ of less than about 20 µm, and a d₁₀ of less than about 5 µm.

In certain embodiments, for example, embodiments of the ceramic precursor composition, the alumina is in a micronized form. By "micronized" is meant that the alumina has a d₅₀ of equal to or less than about 5.0 µm, for example, equal to or less than about 4.0 µm, or equal to or less than about 3.0 µm, or equal to or less than about 2.5 µm, or equal to or less than about 2.0 µm, or equal to or less than about 1.5 µm, or equal to or less than about 1.0 µm, or equal to or less than about 0.5 µm. In certain embodiments, the micronized alumina has a d₅₀ of at least about 0.1 µm, for example, a d₅₀ of at least about 0.15 µm, or a d₅₀ of at least about 0.2 µm. The micronized alumina may have a d₉₀ of less than about 20 µm, for example, a d₉₀ of less than about 15 µm, or a d₉₀ of less than about 10 µm, or a d₉₀ of less than about 9 µm, or a d₉₀ of less than about 8 µm, or a d₉₀ of less than about 7 µm, or a d₉₀ of less than about 6 µm, or a d₉₀ of less than about 5 µm.

In certain embodiments, the micronized alumina has a d₅₀ of less than about 5.0 µm, for example, a d₅₀ of less than about 2.0 µm, and may have a d₉₀ of less than about 10 µm.

As described below, the alumina (e.g., calcined alumina) or micronized alumina may be milled, for example, dry or wet milled, either alone or in the presence of a milling aid, forming a "premix", which may then be combined with other components of the ceramic precursor composition or other components of the engobe comp. Milling aids include other components of the ceramic precursor composition or engobe composition, as described below, but generally utilised in amounts less than that of the final ceramic precursor composition or engobe composition. Thus, depending on the amount of milling aid used, the premix may comprise from about 10 to about 100 % by weight alumina (100 % alumina meaning no milling aid is present in the premix), for example, from about 20 to about 90 % alumina, of from about 40 to about 90 % alumina, or from about 50 to about 90 % alumina, or from about 60 to about 80 % alumina.

The ceramic precursor or engobe composition comprises no more than about 10 % by weight zirconium silicate, based on the total dry weight of the ceramic precursor or engobe composition, respectively. In certain embodiments, the ceramic precursor or engobe composition comprises no more than about 9 % by weight zirconium silicate, for example, no more than about 8 % by weight zirconium silicate, or no more than about 7 % by weight zirconium silicate, or no more than about 6 % by weight zirconium silicate, or no more than about 5 % by weight zirconium silicate, or no more than about 4 % by weight zirconium silicate, or no more than about 3 % by weight zirconium silicate, or no more than about 2 % by weight zirconium silicate or no more than about 1 % by weight zirconium silicate, or no more than about 0.5 % by weight zirconium silicate, or no more than about 0.1 % by weight zirconium silicate. In certain embodiments, the ceramic precursor or engobe composition is essentially free of zirconium silicate.

As discussed above, zirconium silicate has been the material of choice for use as a whitener/opacifier in the decorative ceramics industry. The presently inventors have surprising found that alumina as defined herein may be used as a replacement, either partially or wholly, for zirconium silicate, without adversely effecting certain optical properties (e.g., lightness, whiteness and/or opacity) of ceramic articles, such as earthenware/stoneware tiles (.e.g., a porcelain tile). This is despite the fact that alumina has a lower refractive index than zirconium silicate and would not therefore be expected to offer acceptable optical properties, such as lightness, whiteness and/or opacity. Since alumina, such as calcined alumina, is significantly cheaper and more readily available than zirconium silicate, the use of alumina as defined herein in the compositions of the present invention enables the production of ceramics at lower cost. Further, the present inventors have surprisingly found that alumina having relatively high soda content can be used as a partial or total replacement for zirconium silicate. Without wishing to be bound by theory, it has been found that a relatively high soda content may slow crystal growth in the ceramic leading to smaller grain sizes compared to ceramics prepared from alumina having a relatively low soda content. For example, the ceramic article produced by firing the ceramic precursor composition of the present invention may be characterized as having a primary α-alumina crystal size of about 1 µm or no greater than about 1 µm. Further, as discussed above, the relatively high soda content has been found to suppress or prevent primary α-Al₂O₃ crystal growth in the ceramic, which would otherwise be detrimental to the optical properties of the ceramic, for example, the opacity of the ceramic. Thus, the present inventors have surprisingly found that through the use of alumina having a relatively high soda content and BET surface area in the ranges described herein (particularly in the range of from about 60 to about 90 m²/g, for example, from about 65 to about 85 m²/g, or from about 70 to about 80 m²/g, the opacifying capabilities of the alumina may maximized. There is an additional advantage that costly further processing of alumina, for example, calcined alumina, to reduce the soda content is not necessary.

When present the zirconium silicate may have a d₅₀ of from about 0.5 to about 10 µm for example, less than about 5 µm, a d₉₀ of from about 4.0 to about 20 µm, for example, less than about 10 µm, and a d₁₀ of from about 0.25 to about 5 µm, for example, less than about 2 µm. The zirconium silicate may have a BET specific surface area of from about 2 to about 10 m²/g, for example, less than about 6 m²/g:

The balance of the ceramic precursor or engobe compositions of the present invention may comprise one or more other materials which are suitable for use in a ceramic precursor or engobe composition which is then fired to form a ceramic product, for example, a stoneware or earthenware tile, or a porcelain stoneware tile. Such materials are many and various and may be selected from a hydrous kandite clay such as kaolin, halloysite or ball clay, an anhydrous (calcined) kandite clay such as metakaolin or fully calcined kaolin, nepheline syenite, feldspar, talc, mica, quartz, silica, wollastonite, bauxite, perlite, diatomaceous earth, an alkaline earth metal carbonate or sulphate, such as calcium carbonate, magnesium carbonate, dolomite, and gypsum, or combinations thereof. In certain embodiments, the engobe composition may comprise one or more vitrifiable frits suitable for use in an engobe composition for a ceramic body.

In certain embodiments, the ceramic precursor composition comprises raw materials which are suitable to form a ceramic tile, for example, a porcelain tile therefrom. In certain embodiments, the ceramic precursor composition comprises: from about 5 to about 50 % by weight ball clay, for example, from about 10 to about 40 % by weight ball clay, for example, from about 15 to about 30 % by weight ball clay, based on the total dry weight of the ceramic precursor composition; up to about 50 % by weight kaolin, for example, from about 10 to about 40 % by weight kaolin, for example, from about 15 to about 30 % by weight kaolin, based on the total dry weight of the ceramic precursor composition; and from about 20 to about 70 % by weight feldspar and/or nepheline syenite, for example, from about 40 % to about 70 % by weight feldspar and/or nepheline syenite based on the total dry weight of the ceramic precursor composition. The feldspar may be an alkali feldspar, for example, sodium feldspar, potassium feldspar, or combinations thereof. The ceramic precursor composition may comprise up to about 30 % by weight of silica sand and/or fetdspathic sand. In certain embodiments, the ceramic precursor composition comprises from about 15-25 % by weight ball clay, from about 15-25 % by weight kaolin, and from about 40 to about 70 % by weight feldspar and/or nepheline syenite, for example from about 10-20 % by weight potassium feldspar, and from about 40-50 % by weight sodium feldspar.

In certain embodiments, the engobe composition comprises raw materials which are suitable for application to a ceramic tile, for example, an earthenware/stoneware tile. In certain embodiments, the engobe composition comprises: from about 1 to about 50 % by weight feldspar and/or nepheline syenite, for example, from about 1 to about 25 % by weight feldspar and/or nepheline syenite, or from about 10 to about 20 % by weight feldspar and/or nepheline syenite, based on the total dry weight of the engobe composition; from about 5 to about 40 % by weight ball clay, for example, from about 5 to about 30 % by weight ball clay, or from about 10 to about 25 % by weight ball clay, or from about 15 to about 25 % by weight ball clay, based on the total dry weight of the engobe composition; from about 1 to about 20 % by weight quartz, based on the total dry weight of the engobe composition; and from about 10 to about 60 % by weight of one or more vitrifiable frits suitable for use in an engobe composition for a ceramic body, for example, from about 20 to about 50 % by weight of one or more frits, or from about 30 to about 50 of one or more frits, based on the total dry weight of the engobe composition. In certain embodiments, the engobe composition comprise from about 5-15 % by weight feldspar and/or nepheline syenite, from about 15-25 % by weight ball clay, from about 5-15 % by weight quartz, and from about 40-60 % by weight of one or more vitrifiable frits suitable for use in an engobe composition. The vitrifiable frits may be opaque, transparent, or a combination of opaque and transparent. The one or more vitrifiable frits may have a composition (by chemical analysis) having an SiO₂ content of from about 40-70 %, for example, from about 50-60%, an Al₂O₃ content of from about 2-20 %, for example, from about 5-15%, a B₂O₃ content of from about 2-25 %, for example, from about 2-10 %, a CaO content of from about 0-40, for example, from about 1-15 %, a MgO content of up to about 3 %, for example, from about 0.2 to about 2 %, a Na₂O content of up to about 15 %, for example, from about 0.5 to about 13 %, or from about 0.5 to about 10 %, a K₂O content of up to about 5 %, for example, from about 2-4%, a ZrO₂ content of up to about 12 %, for example, from about 0.1 to about 1 %, or from about 9-11 %, a BaO content of up to about 5 %, for example, from about 3-5 %, or from about 0.1 to about 1 %, and a ZnO content of up to about 10 %, for example, from about 7-10 %, or from about 0.1 to 0.5 %. Exemplary frits include Opaque Frit ED 04 (available from Esmaldur™, Spain) and Transparent Frit FT 820 (available from Esmalgalss™, Spain), and combinations thereof.

In certain embodiments, the dry materials constituting the ceramic precursor or engobe compositions are combined with an amount of a liquid medium, for example, an aqueous liquid medium, for example, water. Thus, in certain embodiments, the ceramic precursor or engobe composition comprise from about 20-80 % by weight water, based on the total dry weight of the composition, for example, at least about 25 % by weight water, or at least about 30 % by weight water, or at least about 35 % by weight water, or at least about 40 % by weight water, or at least about 45 % by weight water, or at least about 50 % by weight water, or at least about 55 % by weight water. In embodiments, the compositions comprise less than about 75 % by weight, for example, less than about 70 % by weight water, or less than about 65 % by weight water, or less tham about 60 % by weight water, or less than about 55 % by weight water. In certain embodiments, the solids content of the compositions following mixing with water ranges from about 40 % to about 90 % by weight, for example, from about 50 % to about 80 % by weight, or from about 60 to about 75 % by weight, or from about 65 to about 75 % by weight.

The ceramic precursor or engobe composition may further comprise a deflocculating agent. Deflocculating agents that may be used in the present invention are commercially available from various sources known to the person skilled in the art. Examples for deflocculating agents suitable for the purposes of the present invention include, but are not limited to, sodium tripolyphosphate (STPP), sodium hexametaphosphate (HMP), sodium silicate, and sodium polyacrylate, which are typically used in the range of 0.001 wt. % to 5.0 wt. %, based on the total dray weight of the ceramic precursor or engobe composition, for example, in the range of 0.001 wt. % to about 3.0 wt. %, or from about 0.001 to about 1.0 wt. %, or from about 0.001 to about 0.1 wt. %.

The ceramic precursor or engobe composition may further comprise an amount of binder, for example, from about 0.01 to about 5.0 wt. % binder, for example, from about 0.01 to about 3 wt. %, or from about 0.01 to about 1.0 wt. %, or from about 0.01 to about 0.5 wt. %, or from about 0.05 to about 0.1 wt. %. Suitable binders are well known to those skilled in the art and include, for example, carboxymethylcellulose.

In certain embodiments, the total amount of a deflocculant and binder is no greater than about 5 wt. %, based on the total dry weight of the ceramic precursor or engobe composition, for example, no greater than about 3 wt. %, or no greater than about 2 wt. %, or no qreater than about 1 wt. %. or no greater than about 0.75 wt. %, or no greater than about 0.5 wt. %, or no greater than about 0.2 wt. %.

In embodiments, the ceramic precursor composition may be in the form of a powder, granular form, mouldable mixture or slurry. In certain embodiments, it will be a ready-to-press powder. By "ready-to-press" is meant a powder which is of a form suitable for pressing and which does not require any additional beneficiation, classification, sizing or other processing prior to pressing. Preparation of the compositions is described in detail below (in accordance with the fifth and sixth aspects of the present invention).

The ceramic precursor composition in granular form may be obtained by spray-drying or by passing the composition through an appropriately sized sieve. For example, the ceramic precursor composition, following mixing but prior to forming into a green body, may be passed through a sieve having an aperture size of no greater than about 1000 µm, for example, no greater than about 750 µm, or no greater than about 500 µm, or no greater than about 250 µm, or no greater than about 125 µm.

In certain embodiments, in which the alumina is micronized, the alumina may be milled/ground to a desired particle size and then, if necessary, subjected to a sizing step to further reduce the particle. The sizing step may be carried out using any suitable size classification device or separator, for example, a hydrocyclone or an appropriately sized sieve, for example, a sieve having an aperture size of no greater than about 5.0 µm, for example, no greater than about 4.0 µm, or no greater than about 3.0 µm, or no greater than about 2.5 µm, or no greater than about 2.0 µm, or no greater than about 1.5 µm, or no greater than about 1.0 µm, or no greater than about 0.5 µm.

### Green body

In accordance with the third aspect of the present invention, the ceramic precursor composition of the first aspect of the present invention, optionally in the form of a ready-to-press powder, is formed into a green body, optionally by pressing the composition. Details of forming are described below (in accordance with the fifth aspect of the present invention).

The body may have any suitable form. For example, the body may be in the form of a plate, panel, brick, sphere, cylinder, or a complex shape. The plate may be planar or non-planar, i.e., curved to some degree. The plate may be in the form of a tile body, for example, a floor tile body or a wall tile body. The tile body may have a thickness ranging from about 1 mm to about 30 mm, for example, from about 3 mm to about 20 mm, for example, from about 4 to about 15 mm, or from about 5 to about 10 mm. The thickness (i.e., cross-section) may be uniform across the tile or may vary across the tile. The tile body may be regular in shape, e.g., circular, ovular, triangular, square, rectangular, pentagonal, hexagonal, octagonal, etc, or irregular in shape. The tile body may be sized to fit, engage or otherwise cooperate with a like tile.

### Ceramic article

The ceramic material according to the fourth aspect of the present invention is obtainable by firing the green body of the second aspect of the present invention. Details of the firing process are described below (in accordance with the fifth aspect of the present invention).

The ceramic article may have any suitable form. For example, the ceramic article may be in the form of a plate, panel, brick, sphere, cylinder, or a complex shape. The plate may be planar or non-planar, i.e., curved to some degree. The plate me be in the form of a tile, for example, a floor tile or a wall tile. The tile body may have a thickness ranging from about 1 mm to about 30 mm, for example, from about 3 mm to about 20 mm, for example, from about 4 to about 15 mm, or from about 5 to about 10 mm. The thickness (i.e., cross-section) may be uniform across the tile or may vary across the tile. The tile body may be regular in shape, e.g., circular, ovular, triangular, square, rectangular, pentagonal, hexagonal, octagonal, etc, or irregular in shape. The tile may be sized to fit, engage or otherwise cooperate with a like tile. The tile may be a porcelain tile, for example, a porcelain tile having a water absorption below 0.5% H₂O by ISO 10545-3:1995.

The ceramic article may be characterized in terms of crystal size. In certain embodiments, the ceramic article comprises primary α-Al₂O₃ crystals having a size of from about 0.1 to about 10 µm, for example, from about 0.5 to about 5.0 µm, or from about 0.5 to about 2.0 µm, or from about 0.5 to about 1.5 µm, or from about 0.5 to about 1.2 µm, or from about 0.6 to about 1.2 µm, or from about 0.7 to about 1.2 µm, or from about 0.8 to about 1.2 µm.

Crystal size may be determined by visual inspection of an SEM of the ceramic article. Crystal size is taken to be the maximum (straight line) dimension between boundaries of an individual crystal as shown in an SEM image of the grain. For other materials in the ceramic article, the crystal size may range from about 0.5 to about 0.45 µm.

In certain embodiments, for any given surface area (shown in an SEM image of the ceramic article) of the ceramic article, at least about 50% of the Al₂O₃ grains have a size from about 0.1 to about 10 µm, for example, from about 0.5 to about 5.0 µm, or from about 0.8 to about 2.0 µm, or from about 0.8 to about 1.5 µm, or from about 0.9 to about 1.2 µm. In certain embodiment, at lest about 60 %, or at least about 70 %, or at least about 80 %, or at least about 90 % of the Al₂O₃ grains have a size from about 0.1 to about 10 µm, for example, from about 0.5 to about 5.0 µm, or from about 0.8 to about 2.0 µm, or from about 0.8 to about 1.5 µm, or from about 0.9 to about 1.2 µm.

The ceramic article, e.g., tile, may have certain optical properties. In certain embodiments, the ceramic article has:
(i) a whiteness index, W_{cie}, of at least about 1, for example, at least 20, or at least about 30; and/or
(ii) a lightness, L*, of at least about 76.0, for example, at least about 83.0, or at least about 85.0; and/or;
(iii) a yellowness, b*, of less than about 12.0, for-example, less than about 10.0, or less than about 7.00, and a redness, a*, of less than about 3.00, for example, less than about 1.50, or less than about 0.90.

Optical properties may be determined in accordance with CIE publication 15.2(1986), section 4.2, details of which are appended to the detailed description.

In certain embodiments, the ceramic article has a CIE whiteness index of at least about 5, or at least about 10, or at least about 15, or at least about 20, or at least about 25, or at least about 26, or at least about 27, or at least about 28, or at least about 29, or at least about 30, or at least about 31, or at least about 32, or at least about 33, or at least about 34, or at least about 35, or at least about 36, or at least about 37. In embodiments, the ceramic article has a CIE whiteness index of no more than about 45, for example, no grater than about 40. Whiteness, W_{cie}, is calculated from X, Y and Z values derived from L*a*b* values.

In certain embodiments, the ceramic article has a lightness of at least about 77.0, for example, at least about 78.0, or at least about 79.0, or at least about 80.0, or at least about 81.0, or at least about 82.0, or at least about 83.0, or at least about 83.5, , or at least about 84.0, or at least about 84.5, or at least about 85.0, or at least about 85.5, or at least about 86.0, or at least about 86.5, or at least about 86.75, or at leas about 87.0, or at least about 87.25, or at least about 87.5, or at least about 88.0 or at least about, or at least about 88.25, or at least about 88.5, or at least about 88.75, or at least about 89.0. In certain embodiments, the lightness, L*, is no greater than about 92.0, for example, no greater than about 91.0, or no greater than about 90.0.

In certain embodiments, the ceramic article has a yellowness, b*, of less than about 11.5, for example, less than about 11.0, or less than about 10.5, or less than about 10,0, or less than about 9.50, or less than about 9.00, less than about 8..50, or less than about 8.00, or less than about 7.50, or less than about 7.00, or less than about 6.75, or less than about 6.50, and a redness, a*, of less than about 2.50, or less than about 2.0, or less than about 1.50, or less than about 1.40, or less than about 1.30, or less than about 1.20, or less than about 1.10, or less than about 1.10, or less than about 1.00, or less than about 0.90, or less than about 0.80, or less than about 0.70, or less than about 0.60, or less than about 0.50, or less than about 0.40, or less than about 0.30.

The ceramic article may have a bulk density in the range of from about 2.0 to about 3.0 g/cm³, for example, from about 2.2 to about 2.8 g/cm³, or from about 2.2 to about 2.7 g./cm³, or from about 2.3 to about 2.6 g/cm³, or from about 2:3 to about 2.5 g/cm³.

The ceramic article may have applied thereto (for example, to a surface of the ceramic article) an engobe composition according to second aspect of the present invention. As described above, the ceramic article may be in the form of a tile, for example, an porcelain tile. The engobe composition may be applied to a wetted surface of the ceramic article and then fired at a temperature of at least about 900°C, for example, a temperature of at least about 1000°C, or at least about 1100°C, or at least about 1200°C, or at least about 1300°C, for example, no greater than about 1500°C, or no greater than about 1450°C. The ceramic tile may have a glaze applied upon the engobe layer. The glaze may be of any form suitable for application to a ceramic tile. The glaze may be transparent or opaque.

### Preparative methods

In accordance with the fifth aspect of the present invention, there is provided a process for making a ceramic article according to the fourth aspect of the present invention, comprising:
(i) milling a mixture comprising:
   (a)from about 1-20 % by weight alumina, based on the total dry weight of the mixture being milled, wherein said alumina has a soda (Na₂O) content of greater than about 0.25 % by weight,
   (b)no more than about 10 % by weight zirconium silicate, based on the total dry weight of the mixture being milled,
   (c) at least about 70 % by weight of ceramic precursor material, other than (a) or (b), suitable for firing to form a ceramic article, for example, a porcelain tile body, and optionally
   (d)at least about 20 % by weight water, based on/the total dry weight of the mixture being milled, and
   (e)up to about 5 % by weight deflocculant, based on the total dry weight of the mixture being milled;
(ii) forming a green body, for example, a green tile body, from said wet-milled mixture;
(iii) optionally drying said green body, for example, a green tile body; and
(iv) firing said green body, for example, a green tile body, at a temperature sufficient to form a ceramic article, for example, a tile.

In certain embodiments, the mixture is wet-milled to form a homogenous mixture.

Mixing and milling, e.g., wet-milling, may be performed with any suitable apparatus, such as, for example, a mixer, or mill, for example, a ball mill, such as a planetary ball mill.

In an embodiment, the total milling time is less than about 25 hours, for example, less than about 20 hours, or less than about 15 hours, or lass than about 10 hours, or less than about 5 hours, or less than about 3 hours, or less than about 2 hours, or less than about 1 hour, or less than about 45 minutes. Typically, the total milling time is greater than about 10 minutes.

In certain embodiments, for example, embodiments in which the alumina is micronized, the alumina may be added towards the end of the milling stage, for example, during the last 5 minutes of milling, or the last 3 minutes of milling, or the last 1 minute of milling. For example, components (b), (c), (d) and (e) may be combined and milled for a period of time of from about 10 minutes to about 1 hour, following which alumina and/or micronized alumina may be added a milling continued for a further 5 minutes or less, for example, 3 minutes or less, or 1 minute or less. In certain embodiments, the alumina may be added after the milling stage. Micronized alumina may be added in the form of a suspension.

The water may be partially or completely eliminated from the mixture at the end of milling. In one advantageous embodiment, the water is removed by spray-drying to prepare a powder, for example, a ready-to-press powder. Other dryers include tunnel dryers and periodic dryers. In certain embodiments, the wet-milled mixture is spray dried and then granulated by passing through a sieve having an aperture size of no greater than about 1000 µm to form a granular powder. In certain embodiments, the sieve has an aperture size of no greater than about 750 µm, for example, no greater than about 500 µm, or no greater than about 250 µm, or no greater than about 125 µm

Suitable ceramic precursor materials other than (a) or (b) are many and various and may be selected from a hydrous kandite clay such as kaolin, halloysite or ball clay, an anhydrous (calcined) kandite clay such as metakaolin or fully calcined kaolin, nepheline syenite, feldspar, talc, mica, quartz, silica, wollastonite, bauxite, perlite, diatomaceous earth, an alkaline earth metal carbonate or sulphate, such as calcium carbonate, magnesium carbonate, dolomite, and gypsum, or combinations thereof.

In certain embodiments, the ceramic precursor composition comprises raw materials which are suitable to form a ceramic tile, for example, a porcelain tile therefrom. In certain embodiments, the ceramic precursor composition comprises: from about 5 to about 50 % by weight ball clay, for example, from about 10 to about 40 % by weight ball clay, or from about 15 to about 30 % by weight ball clay, based on the total dry weight of the ceramic precursor composition; up to about 50 % bv weight kaolin, for example, from about 10 to about 40 % by weight kaolin, or from about 15 to about 30 % by weight kaolin, based on the total dry weight of the ceramic precursor composition; up to about 50 % by weight kaolin, for example; and from about 20 to about 70 % by weight feldspar and/or nepheline syenite, for example, from about 40 to about 70 % by weight feldspar and/or nepheline syenite, based on the total dry weight of the ceramic precursor composition. The feldspar may be an alkali feldspar, for example, sodium feldspar, potassium feldspar, or combinations thereof. The ceramic precursor composition may further comprise up to about 30 % by weight of silica sand/and or feldspathic sand. In certain embodiments, the ceramic precursor composition comprises from about 15-25 % by weight ball clay, from about 15-25 % by weight kaolin, and from about 40 to about 70 % by weight feldspar and/or nepheline syenite, for example, from about 10-20 % by weight potassium feldspar, and from about 40-50 % by weight sodium feldspar.

The resulting mixture is then shaped into green body by any known ceramic forming process. Forming is making the mixed material into a green body of any desirable form or shape, e.g., a plate (e.g., tile), panel or brick, cylinder, sphere, or a complex shape. It may involve any one of conventional processes such as extrusion, slip-casting, pressure-casting, throwing, tape-casting, injection molding, or pressing, including dry pressing, isostatic pressing, or hot isostatic pressing. Pressing may be carried out under any suitable pressure. For example, a pressure of at least about 30 bar, or at least about 40 bar, or at least about 50 bar.

The prepared body is then dried, for example, at a temperature of at least about 100°C, e.g., about 105°, and fired at a suitable temperature for a suitable time to form a fired ceramic body. The drying and firing conditions will vary depending the ceramic processing conditions composition, forming, size of green body and nature of equipments. Firing may be conducted in any suitable oven or kiln.

The firing may be conducted at a temperature of at least 900°C, for example, at least about 1000°C, or at least about 1100°C, or at least about 1200°C, or at least 1250°C, or at least about 1300°C, or at least about 1350°C, or at least about 1400°C, or at least about 1450°C. The firing temperature may be less than about 1500°C, for example, less than about 1450°C, or less than about 1300°C.

Firing time may be between about 5 hours and 48 hours, for example, from about 10 hours to about 36 hours, for example, from about 10 hours to about 24 hours.

In certain embodiments, firing time is between 15 minutes and 120 minutes, for example, from about 20 minutes to about 90 minutes, for example, from about 20 minutes to about 60 minutes. The maximum temperature may be from about 1050°C to about 1250°C.

The ceramic article, for example, a tile, obtainable by the process of the fifth aspect of the invention may have an engobe composition applied thereto. The engobe composition may be the engobe composition according to the second aspect of the present invention. In certain embodiments, the engobe composition (in wetted form) is applied to a wetted surface of the ceramic article, for example, a wetted surface of a ceramic tile, which may be an earthenware or stoneware tile. The engobe composition may be applied using conventional casting methods and equipment, e.g., a slit applicator, bell, pressurized vela or double disc devices.

The ceramic article or tile may then be dried, for example, at a temperature of at least about 70°C, e.g., at least about 100°C, e.g., about 105°C, and then fired for a suitable period of time, as described above. In certain embodiments the ceramic article (e.g., tile) is fast fired, by which is meant that firing is conducted over a period of less than about 2 hours, for example, less than about 1.5 hours, or less than about 1 hour. Suitable firing temperatures are described above in connection with the firing of a green body. Fast firing may be conducted in a gas roller kiln.

The ceramic article, e.g., tile, having an engobe composition applied thereto and then fired as described above, may have a glaze applied upon the engobe layer. The glaze may be of any form suitable for application to a ceramic tile, for example, an earthenware or stoneware tile. The glaze may be transparent or opaque.

In accordance with the sixth aspect of the present invention, there is provided a process for making an engobe composition according to second aspect of the present invention, comprising:
(i) wet-milling a mixture comprising:
   (a)from about 1-20 % by weight alumina, based on the total dry weight of the mixture being milled, wherein said alumina has a soda (Na₂O) content of greater than about 0.25 % by weight,
   (b)no more than about 10 % by weight zirconium silicate, based on the total dry weight of the mixture being milled,
   (c) at least about 70 % by weight of engobe precursor material, other than (a) or (b), suitable for firing to form an engobe layer upon a ceramic article, for example, an earthenware or stoneware tile body,
   (d)at least about 20 % by weight water, based on the total dry weight of the mixture being milled, and
   (e)up to about 5 % by weight deflocculant, based on the total dry weight of the mixture being milled; and
(ii) optionally sizing the resulting wet-milled engobe composition.

In certain embodiments, the mixture comprises no more than about 50 % by weight water, for example, no more than about 45 % by weight water, or no more than about 40 % by weight water, or no more than about 35 % by weight water, or no more than about 30 % by weight water.

Suitable engobe precursor materials other than (a) or (b) are many and various and may be selected from a hydrous kandite clay such as kaolin, halloysite or ball clay, an anhydrous (calcined) kandite clay such as metakaolin or fully calcined kaolin, nepheline syenite, feldspar, talc, mica, quartz, silica, wollastonite, bauxite, perlite, diatomaceous earth, an alkaline earth metal carbonate or sulphate, such as calcium carbonate, magnesium carbonate, dolomite, and gypsum, or combinations thereof.

In certain embodiments, the engobe precursor material comprises raw materials which are suitable for application to a ceramic tile, for example, an earthenware or stoneware tile. In certain embodiments, the engobe precursor material comprises: from about 1 to about 50 % by weight feldspar and/or nepheline syenite, for example, from about 1 to about 25 % by weight feldspar and/or nepheline syenite, or from about 10 to about 20 % by weight feldspar and/or nepheline syenite, based on the total dry weight of the engobe composition; from about 5 to about 40 % by weight ball clay, for example, from about 5 to about 30 % by weight ball clay, or from about 10 to about 25 % by weight ball clay, or from about 15 to about 25 9% by weight hall clay, based nn the total dry weight of the engobe composition; from about 1 to about 20% by weight quartz, based on the total dry weight of the engobe composition; and from about 10 to about 60 % by weight of one or more vitrifiable frits suitable for use in an engobe composition for a ceramic body, for example, from about 20 to about 50 % by weight of one or more frits, or from about 30 to about 50 % of one or more frits, based on the total dry weight of the engobe composition. In certain embodiments, the engobe composition comprise from about 5-15 % by weight feldspar and/or nepheline syenite from about 15-25 % by weight ball clay, from about 5-15 % by weight quartz, and from about 40-60 % by weight of one or more vitrifiable frits suitable for use in an engobe composition. The vitrifiable frits may be opaque, transparent, or a combination of opaque and transparent. The one or more vitrifiable frits may have a composition (by chemical analysis) having an SiO₂ content of from about 40-70 %, for example, from about 50-60%, an Al₂O₃ content of from about 2-20 %, for example, from about 5-15%, a B₂O₃ content of from about 2-25 %, for example, from about 2-10 %, a CaO content of from about 0-40, for example, from about 1-15 %, a MgO content of up to about 3 %, for example, from about 0.2 to about 2 %, a Na₂O content of up to about 15 %, for example, from about 0.5 to about 13 %, or from about 0.5 to about 10 %, a K₂O content of up to about 5 %, for example, from about 2-4%, a ZrO₂ content of up to about 12 %, for example, from about 0.1 to about 1 %, or from about 9-11%, a BaO content of up to about 5 %, for example, from about 3-5 %, or from about 0.1 to about 1 %, and a ZnO content of up to about 10 %, for example, from about 7-10 %, or from about 0.1 to 0.5 %. Exemplary frits include Opaque Frit ED 04 (available from Esmaldur™, Spain), Transparent Frit FT 820 (available from Esmalglass™, Spain), and combinations thereof.

Mixing and wet-milling may be performed with any suitable apparatus, such as, for example, a mixer, or mill, for example, a ball mill, such as a planetary ball mill.

In an embodiment, the total milling time is less than about 25 hours, for example, less than about 20 hours, or less than about 15 hours, or less than about 10 hours, or less than about 5 hours, or less than about 3 hours, or less than about 2 hours, or less than about 1 hour, or less than about 45 minutes. Typically, the total milling time is greater than about 10 minutes.

Following milling, the engobe composition may have a d₅₀ of no greater than about 10 µm, for example, no greater than about 8 µm, or no greater than about 6 µm. Following milling, the engobe composition may have a d₅₀ of at least about 1 µm, for example, at least about 2 µm. For the avoidance of doubt, the particle sizes referred to immediately above are given with respect to all solid components present in the engobe composition.

When carried out, sizing step (ii) may comprise sieving the wet-milled engobe mixture, for example, sizing with a sieve having an aperture size of no greater than about 750 µm, for example, no greater than about 500 µm, or no greater than about 250 µm, or no greater than about 125 µm, or no greater than about 100 µm, or no greater than about 75 µm, or no greater than about 50 µm.

The engobe composition may then be applied to the surface of a ceramic article, e.g., tile, as described above in connection with the fifth aspect of the present invention.

In certain embodiments of the fifth and sixth aspects of the present invention, the alumina is calcined alumina and the calcined alumina is formed by:
(1) heating aluminium hydroxide, for example, gibbsite, to a temperature greater than about 800°C such that at least about 10 % by weight α-Al₂O₃ is formed, for example, at least about 15 % by weight, or at least about 20 % by weight α-Al₂O₃ is formed based on the total weight of calcined alumina; or
(2) treating aluminium hydroxide, for example, gibbsite, using the Bayer process and heating under pressure, such that at least about 10 % α-Al₂O₃ is formed, for example, at least about 15 % by weight, or at least about 20 % by weight α-Al₂O₃ is formed based on the total weight of calcined alumina.

In certain embodiments, processes (1) or (2) are carried out under suitable conditions to form at least about 50 % by weight α-Al₂O₃, for example, at least about 75 % by weight α-Al₂O₃. In certain embodiments, processes (1) or (2) are carried out under suitable conditions to form a calcined alumina product consisting essentially 100 % by weight α-Al₂O₃.

The temperature during (1) or (2) may be greater than about 900°C, or greater than about 1000°C, or greater than about 1100°C.

In certain embodiments, the process of making the ceramic article does not include a step of reducing the soda content of the calcined alumina prior to (i) of the fifth or sixth aspect of the present invention.

### Measurement of optical properties

In 1976 the CIELAB or CIE L*a*b colour scale was created. CIE publication 15.2(1986), section 4.2 contains details on this colour scale. This scale provides a standard, approximately uniform color scale enabling comparison of colour values. According to this scale, differences between points plotted in the color space correspond to visual differences between the colors plotted. The CIELAB color space is organized in a cube form. The L* axis runs from the top to bottom. The maximum for L* is 100, which represents a perfect reflecting diffuser. The minimum for L* is zero, which represents black. The a* and b* axes have no specific numerical limits. Positive a* is red. Negative a* is green. Positive b* is yellow. Negative b* is blue. A diagram representing the CIELAB color space is shown in Figure 1.

THE CIELAB colour scale maybe used on any object whose color may be determined. It is used extensively in many industries. It provides a standard scale for comparison of color values.

### - conditions for measurement

Instrumental: Konica Minolta CM2500d color measurement instrument in reflectance mode
Illuminant: D₆₅
Standard Observer Function: 10 degree

For the avoidance of doubt, the present application is directed to the subject-matter described in the following numbered paragraphs:
1. A ceramic precursor composition suitable for firing to form a tile body, said composition comprising from about 1-20 % by weight alumina and no more than about 10 % by weight zirconium silicate, based on the total dry weight of the ceramic precursor composition, wherein said alumina has a soda (Na₂O) content of greater than about 0.25 % by weight, based on the total weight of alumina.
2. An engobe composition for a ceramic body, said composition comprising from about 1-20 % by weight alumina and nn more than about 10 % by weight zirconium silicate, based on the total dry weight of the ceramic precursor composition, wherein said alumina has a soda (Na₂O) content of greater than about 0.25 % by weight.
3. The ceramic precursor or engobe composition according to numbered paragraph 1 or 2, wherein the alumina has a soda content of at least about 0.30 wt. %, for example, at least about 0.35 wt. %.
4. The ceramic precursor or engobe composition according to any preceding numbered paragraph, wherein said alumina has a d₅₀ of less than about 100 µm.
5. The ceramic precursor or engobe composition according to numbered paragraph 5, wherein said alumina has a d₅₀ of less than about 80 µm, a d₉₀ of less than about 120 µm, and a d₁₀ of less than about 15 µm.
6. The ceramic precursor or engobe composition according to any preceding numbered paragraph, further comprising at least about 20 % by weight water, based on the total dry weight of the composition.
7. The ceramic precursor composition according to any preceding numbered paragraph, where the alumina is a micronized alumina having a d₅₀ of less than about 5.0 µm, optionally a d₅₀ of less tham about 2.0 µm, and optionally a d₅₀ of less than about 10 µm.
8. The ceramic precursor material according to numbered paragraph 7, wherein the micronized alumina has been wet milled as a premix, optionally either alone or with other components of the ceramic precursor mixture as milling aid(s), and wherein the premix comprises from about 10 to about 100 % by weight alumina, for example, from about 20 to about 90 % alumina, of from about 40 to about 90 % alumina, or from about 50 to about 90 % alumina, or from about 60 to about 80 % alumina.
9. The ceramic precursor or engobe composition according to any preceding numbered paragraph, wherein the alumina is calcined alumina, of which at least about 10 wt. % is α-Al₂O₃, for example, at least about 15 wt. % is α-Al₂O₃.
10. The ceramic precursor composition according to any preceding numbered paragraph, wherein the composition is in granular form which passes through a sieve having an aperture size of no greater than about 1000 µm. for example, no greater than about 500 µm.
11. The ceramic precursor or engobe composition according to any preceding numbered paragraph, wherein the composition comprises less than about 5 wt. % zirconium silicate, optionally less than about 2 wt. % zirconium silicate, optionally less than about 1 wt. % zirconium silicate, or is free of zirconium silicate.
12. The ceramic precursor composition according to any preceding numbered paragraph, wherein the composition comprises from about 5 to about 50 % by weight ball clay, up to about 50 % by weight kaolin, and from about 20 to about 70 % by weight feldspar and/or nepheline syenite.
13. The engobe composition according to any preceding numbered paragraph, wherein the composition comprises from about 1 to about 50 % by weight feldspar and/or nepheline syenite, from about 5 to about 40 % by weight ball clay, from about 1 to about 20 % by weight quartz, and from about 10 to about 60 % by weight of one or more vitrifiable frits suitable for use in an engobe composition for a ceramic body.
14. The ceramic precursor or engobe composition according to any preceding numbered paragraph, wherein the alumina has a BET specific surface area of from about 1 to about 100 m²/g, optionally from about 20 to about 95 m²/g, and optionally from about 40 to about 90 m²/g.
15. A green body formed from the ceramic precursor composition according to any preceding numbered paragraph.
16. A ceramic article obtainable by firing the green body of numbered paragraph 15.
17. The ceramic article according to numbered paragraph 16, having:
   (i) a whiteness index, Wcie, of at least about 1, for example, at least about 20, or at least about 30; and/or
   (ii) a lightness, L*, of at least about 76.0, for example, at least about 83.0, or at least about 85.0; and/or
   (iii) a yellowness, b*, of less than about 12.0, for example, less than about 10.00, or less than about 7.00; and a redness, a*, of less than about 3.0, for example, less than about 1.50, or less than about 0,70.
18. A green body or ceramic article having a wetted surface and a layer of an engobe composition according to any one of numbered paragraphs 2-6, 9, 11 and 14, optionally wherein the engobe composition is fired at a temperature of at least about 900°C.
19. A ceramic article having an engobe according to numbered paragraph 18, wherein the ceramic article is a ceramic article according to numbered paragraph 15 or 16.
20. A ceramic article according to numbered paragraph 19 in the form of a tile, optionally wherein the tile is an earthenware or stoneware tile or porcelain stoneware tile.
21. A glazed tile according to numbered paragraph 20.
22. A process for making a ceramic article, comprising:
   (iv) milling a mixture comprising:
      (a) from about 1-20 % by weight alumina, based on the total dry weight of the mixture being milled, wherein said alumina has a soda (Na₂O) content of greater than about 0.25 % by weight,
      (b) no more than about 10 % by weight zirconium silicate, based on the total dry weight of the mixture being milled,
      (c) at least about 70 % by weight of ceramic precursor material, other than (a) or (b), suitable for firing to form a ceramic article, for example, a porcelain tile body, and optionally
      (d) at least about 20 % by weight water, based on the total dry weight of the mixture being milled, and
      (e) up to about 5 % by weight deflocculant, based on the total dry weight of the mixture being milled;
   (ii) forming a green body, for example, a green tile body, from said milled mixture;
   (iii) optionally drying said green body, for example, said green tile body; and
   (iv) firing said tile at a temperature sufficient to form a ceramic article, for example; a stoneware, a porcelain stoneware or a porcelain tile.
23. The process of numbered paragraph 22, wherein the mixture comprises (c) and (d), and (ii) comprises spray drying the wet-milled mixture to form a granular powder, and pressing said granular powder under a pressure of at least about 30 bar to form said green body.
24. A process for making an engobe composition, comprising:
   (v) wet-milling a mixture comprising:
      (a) from about 1-20 % by weight alumina, based on the total dry weight of the mixture being milled, wherein said alumina has a soda (Na₂O) content of greater than about 0.25 % by weight,
      (b) no more than about 10 % by weight zirconium silicate, based on the total dry weight of the mixture being milled,
      (c) at least about 70 % by weight of engobe precursor material, other than (a) or (b), suitable for firing to form an engobe layer upon a ceramic article, for example, a porcelain tile body,
      (d) at least about 30 % by weight water, based on the total dry weight of the mixture being milled, and
      (e) up to about 5 % by weight deflocculant, based on the total dry weight of the mixture being milled; and
   (vi) optionally sizing the resulting wet-milled engobe composition.
25. The process of numbered paragraphs 22-24, wherein firing time is between about 15 minutes and 120 minutes, for example, from about 20 minutes to about 90 minutes, for example, from about 20 minutes to about 60 minutes, and the maximum temperature ranges from about 1050°C to about 1250°C.
26. The process according to any one of numbered paragraphs 22-25, wherein the alumina has a BET specific surface area of from about 1 to about 100 m²/g, optionally from about 20 to about 95 m²/g, and optionally from about 40 to about 90 m²/g.
27. The process according to any one of numbered paragraphs 22-26, wherein said alumina is calcined alumina, wherein said calcined alumina is formed by:
   (1) heating aluminium hydroxide to a temperature greater than about 800°C such that at least about 10 % by weight α-Al₂O₃ is formed, based on the total weight of calcined alumina; or
   (2) treating aluminium hydroxide using the Bayer process and heating under pressure, such that at least about 10 % α-Al₂O₃ is formed, based on the total weight of calcined alumina; and
   wherein the process does not include a step of reducing the soda content of the calcined alumina prior to (i) of claim 22 or 24.
28. Use of alumina having a soda (Na₂O) content of greater than about 0.25 % by weight, based on the total weight of alumina, as whitener and/or opacifier in a ceramic article, for example, a porcelain tile, formed from a ceramic precursor composition comprising no more than about 10 % by weight zirconium silicate, based on the total dry weight of the ceramic precursor composition, wherein said alumina is present in the ceramic precursor composition in an amount of from about 1 to about 20 % by weight, based on the total dry weight of the ceramic precursor composition.
29. Use of alumina having a soda (Na₂O) content of grater than about 0.25 % by weight, based on the total weight of alumina, as whitener and/or opacifier in an engobe composition for a ceramic body, for example, a porcelain tile, wherein said engobe composition comprises no more than about 10 % by weight zirconium silicate, based on the total dry weight of the engobe composition, wherein said alumina is present in the engobe composition in an amount of from about 1 to about 20 % by weight, based on the total dry weight of engobe composition.
30. Use according to numbered paragraphs 26 or 27, wherein the alumina has a BET specific surface area of from about 1 to about 100 m²/g, optionally from about 20 to about 95 m²/g, and optionally from about 40 to about 90 m²/g.

## Claims

1. A ceramic precursor composition suitable for firing to form a tile body, said composition comprising from about 1-20 % by weight alumina and no more than about 10 % by weight zirconium silicate, based on the total dry weight of the ceramic precursor composition, wherein said alumina has a soda (Na₂O) content of greater than about 0.25 % by weight, based on the total weight of alumina.

2. An engobe composition for a ceramic body, said composition comprising from about 1-20 % by weight alumina and no more than about 10 % by weight zirconium silicate, based on the total dry weight of the ceramic precursor composition, wherein said alumina has a soda (Na₂O) content of greater than about 0.25 % by weight.

3. The ceramic precursor or engobe composition according to claim 1 or 2, wherein the alumina has a soda content of at least about 0.30 wt. %, for example, at least about 0.35 wt. %.

4. The ceramic precursor composition according to any preceding claim, where the alumina is a micronized alumina having a d₅₀ of less than about 5.0 µm, optionally a d₅₀ of less tham about 2.0 µm, and optionally a d₉₀ of less than about 10 µm.

5. The ceramic precursor material according to claim 4, wherein the micronized alumina has been wet milled as a premix, optionally either alone or with other components of the ceramic precursor mixture as milling aid(s), and wherein the premix comprises from about 10 to about 100 % by weight alumina, for example, from about 20 to about 90 % aiumina, of from about 40 to about 90 % alumina, or from about 50 to about 90 % alumina, or from about 60 to about 80 % alumina.

6. The ceramic precursor or engobe composition according to any preceding claim, wherein the alumina is calcined alumina, of which at least about 10 wt. % is α-Al₂O₃, for example, at least about 15 wt. % is α-Al₂O₃.

7. The ceramic precursor or engobe composition according to any preceding claim, wherein the composition comprises less than about 5 wt. % zirconium silicate, optionally less than about 2 wt. % zirconium silicate, optionally less than about 1 wt. % zirconium silicate, or is free of zirconium silicate.

8. The ceramic precursor composition according to any preceding claim, wherein the composition comprises from about 5 to about 50 % by weight ball clay, up to about 50 % by weight kaolin, and from about 20 to about 70 % by weight feldspar and/or nepheline syenite.

9. The engobe composition according to any preceding claim, wherein the composition comprises from about 1 to about 50 % by weight feldspar and/or nepheline syenite, from about 5 to about 40 % by weight ball clay, from about 1 to about 20 % by weight quartz, and from about 10 to about 60 % by weight of one or more vitrifiable frits suitable for use in an engobe composition for a ceramic body.

10. The ceramic precursor or engobe composition according to any preceding claim, wherein the alumina has a BET specific surface area of from about 1 to about 100 m²/g, optionally from about 20 to about 95 m²/g, and optionally from about 40 to about 90 m²/g.

11. A green body formed from the ceramic precursor composition according to any preceding claim.

12. A ceramic article obtainable by firing the green body of claim 11.

13. A ceramic article according to claim 12 in the form of a tile, optionally wherein the tile is an earthenware or stoneware tile or porcelain stoneware tile.

14. A glazed tile according to claim 13.

15. A process for making a ceramic article, comprising:
(i) milling a mixture comprising:
(a) from about 1-20 % by weight alumina, based on the total dry weight of the mixture being milled, wherein said alumina has a soda (Na₂O) content of greater than about 0.25 % by weight,
(b) no more than about 10 % by weight zirconium silicate, based on the total dry weight of the mixture being milled,
(c) at least about 70 % by weight of ceramic precursor material, other than (a) or (b), suitable for firing to form a ceramic article, for example, a porcelain tile body, and optionally
(d) at least about 20 % by weight water, based on the total dry weight of the mixture being milled, and
(e) up to about 5 % by weight deflocculant, based on the total dry weight of the mixture being milled;
(ii) forming a green body, for example, a green tile body, from said milled mixture;
(iii) optionally drying said green body, for example, said green tile body; and
(iv) firing said tile at a temperature sufficient to form a ceramic article, for example, a stoneware, a porcelain stoneware, or a porcelain tile.

16. A process for making an engobe composition, comprising:
(i) wet-milling a mixture comprising:
(a) from about 1-20 % by weight alumina, based on the total dry weight of the mixture being milled, wherein said alumina has a soda (Na₂O) content of greater than about 0.25 % by weight,
(b) no more than about 10 % by weight zirconium silicate, based on the total dry weight of the mixture being milled,
(c) at least about 70 % by weight of engobe precursor material, other than (a) or (b), suitable for firing to form an engobe layer upon a ceramic article, for example, a porcelain tile body,
(d) at least about 30 % by weight water, based on the total dry weight of the mixture being milled, and
(e) up to about 5 % by weight deflocculant, based on the total dry weight of the mixture being milled; and
(ii) optionally sizing the resulting wet-milled engobe composition.

17. The process of claim 15 or 16, wherein firing time is between about 15 minutes and 120 minutes, for example, from about 20 minutes to about 90 minutes, for example, from about 20 minutes to about 60 minutes, and the maximum temperature ranges from about 1050°C to about 1250°C.

18. The process according to any one of claims 15-17, wherein the alumina has a BET specific surface area of from about 1 to about 100 m²/g, optionally from about 20 to about 95 m²/g, and optionally from about 40 to about 90 m²/g.
